Europäisches Patentamt

European Patent Office

Office européen des brevets

(11) Publication number: **0 186 992**
**B1**

(12) **EUROPEAN PATENT SPECIFICATION**

(45) Date of publication of patent specification: **02.08.89**

(51) Int. Cl.⁴: **G 02 B 6/44**

(21) Application number: **85308986.0**

(22) Date of filing: **11.12.85**

(54) **Optical cables.**

(30) Priority: **19.12.84 GB 8432122**

(43) Date of publication of application:
**09.07.86 Bulletin 86/28**

(45) Publication of the grant of the patent:
**02.08.89 Bulletin 89/31**

(84) Designated Contracting States:
**DE FR IT**

(56) References cited:
**DE-A-1 515 427**
**DE-A-2 163 351**
**DE-A-2 855 588**
**DE-A-3 225 581**
**FR-A-2 420 146**
**GB-A-2 017 967**
**GB-A-2 023 060**
**GB-A-2 052 092**
**GB-A-2 123 978**
**US-A-2 805 276**

(73) Proprietor: **Telephone Cables Limited**
**Chequers Lane**
**Dagenham Essex RM9 6QA (GB)**

(72) Inventor: **Peacock, Alan James**
**2, Hilary Close**
**Hornchurch Essex (GB)**

(74) Representative: **Kirby, Harold Victor Albert**
**Central Patent Department Wembley Office The**
**General Electric Company, p.l.c. Hirst Research**
**Centre East Lane**
**Wembley Middlesex HA9 7PP (GB)**

Courier Press, Leamington Spa, England.

## Description

This invention relates to optical cables of the type having at least one optical unit wound helically around a central core and surrounded by an outer protective sheath, the or each said optical unit comprising one or more optical fibres loosely enclosed within a tube. Such cables will be referred to hereinafter as being "of the type specified".

Cables of the type specified are particularly suited for installation in gas pressurised systems. However in such systems the distance between repeaters is such that a low pneumatic resistance is essential. It is thus an object of the present invention to provide additional space within the cable for gas flow along the length of the cable, over and above that provided by the interstices between the stranded optical units.

Accordingly, the invention provides an optical cable of the type specified wherein the central core comprises a central strength member coated with a plastic sheath having longitudinal grooves in its outer surface which provide additional paths for the passage of pressurised gas.

The longitudinal grooves may extend parallel to the cable axis, or may follow a helical or undulating path along the sheath, and it will be understood that grooves of these different forms are included within the term "longitudinal grooves".

Preferably, the plastic sheath is extruded around the central strength member. The cable may also include at least one electrical conductor also wound helically around the coated central strength member. The cable may include a plurality of optical units and electrical conductors interwound with one another. These conductors may be plastic insulated copper conductors which may be singles or formed into pairs or quads.

Further sheaths may be provided around the outer protective sheath.

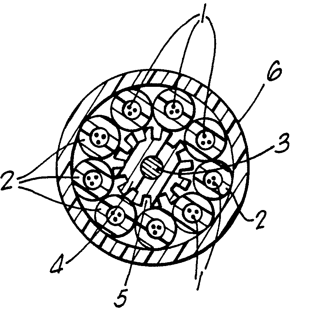

One embodiment of an optical cable according to the invention will now be more fully described by way of example with reference to the drawing.

The optical cable comprises a plurality of optical fibres 1 loosely enclosed within plastic tube 2 to form optical units. In this embodiment three fibres 1 are shown within each such tube 2 of which nine are shown.

The tubes 2 are helically wound around a central strength member 3 which has been coated with a plastics extrudate 4 having longitudinal grooves 5 running along its length. These grooves 5 allow more gas to flow along the cable than can flow along the interstices between the tubes 2.

The tubes 2 stranded around the central strength member 3 are finally enclosed within at least one protective sheath 6. Although only one such sheath is shown, several sheaths having different properties may of course be utilised, as desired.

One or more of the optical units may be replaced by electric conductors which may be in the form of insulated copper conductors of any convenient form, preferably having substantially the same external diameter as the optical units.

The longitudinal grooves may either be straight or extend in a helical fashion around the extrudate. In the latter case they may be of opposite hand to the helically wound optical units. Also in some cases the grooves may follow an undulating path.

## Claims

1. A gas pressurised optical cable, having one or more optical units (1, 2) would helically around a central core (3, 4) and surrounded by an outer protective sheath (6), wherein the central core (3, 4) comprises a central strength member (3), coated with a plastic sheath (4) having longitudinal grooves (5) in its outer surface for providing additional paths for the passage of pressurised gas.

2. An optical cable according to Claim 1 including one or more electrical conductors also would helically around the central core (3, 4).

3. An optical cable according to Claim 2 including a plurality of optical units and a plurality of electrical conductors interwound with each other.

4. An optical cable according to any preceding Claim wherein the grooved sheath (4) has been extruded around the central strength member (3).

5. An optical cable according to any preceding Claim wherein the longitudinal grooves (5) extend parallel to the cable axis.

6. An optical cable according to any preceding Claim wherein the longitudinal grooves (5) extend helically around the sheath (4).

7. An optical cable according to any preceding Claim wherein the longitudinal grooves (5) follow an undulating path along the sheath (4).

## Patentansprüche

1. Optisches, unter inneren Gasüberdruck gesetztes Kabel, das eine oder mehrere optische Einheiten (1, 2), die spiralartig um einen zentralen Kern (3, 4) herumgewunden sind und von einer äußeren Schutzhülle (6) um geben sind, aufweist und in dem der zentrale Kern (3, 4) ein zentrales Versteifungsteil (3) umfaßt, das mit einer Kunststoffhülle (4) überzogen ist, die Längsrillen (5) in ihrer Außenfläche zur Schaffung von zusätzlichen Pfaden zur Durchströmung von unter Druck stehendem Gas aufweist.

2. Optisches Kabel nach Anspruch 1, welches einen oder mehrere elektrische Leiter einshließt, die ebenfalls spiralartig um den zentralen Kern (3, 4) herumgewunden sind.

3. Optisches Kabel nach Anspruch 2, welches mehrere optische Einheiten und mehrere elektrische Leiter umfaßt, die miteinander verwunden sind.

4. Optisches Kabel nach einem der vorhergehenden Ansprüche, in welchem die mit Rillen versehene Hülle (4) um das zentrale Versteifungsteil (3) herum extrudiert worden ist.

5. Optisches Kabel nach einem der vorhergehenden Ansprüche, in welchem die Längsrillen (5) sich parallel zur Kabelachse erstrecken.

6. Optisches Kabel nach einem der vorhergehenden Ansprüche, in welchem die Längsrillen (5) sich spiralartig um die Hülle (4) erstrecken.

7. Optisches Kabel nach einem der vorhergehenden Ansprüche, in welchem die Längsrillen (5) entlang der Hülle (4) einer undulierenden Bahn folgen.

**Revendications**

1. Câble optique à pression de gaz, ayant un ou plusieurs ensembles optiques (1, 2) enroulés en hélice autour d'une âme centrale (3, 4) et entourés par une gaine protectrice externe (6), dans lequel l'âme centrale (3, 4) comporte un organe central (3) d'armature, revêtu d'une gaine (4) de matière plastique ayant des gorges longitudinales (5) à sa surface externe afin que des trajets supplémentaires soient formés pour le passage de gaz comprimé.

2. Câble optique selon la revendication 1, comprenant un ou plusieurs conducteurs électriques qui sont enroulés en hélice autour de l'âme centrale (3, 4).

3. Câble optique selon la revendication 2, comprenant plusieurs ensembles optiques et plusieurs conducteurs électriques entrelacés mutuellement.

4. Câble optique selon l'une quelconque des revendications précédentes, dans lequel la gaine (4) munie de gorges a été extrudée autour de l'organe central (3) d'armature.

5. Câble optique selon l'une quelconque des revendications précédentes, dans lequel les gorges longitudinales (5) sont disposées parallèlement à l'axe du câble.

6. Câble optique selon l'une quelconque des revendications précédentes, dans lequel les gorges longitudinales (5) sont disposées en hélice autour de la gaine (4).

7. Câble optique selon l'une quelconque des revendications précédentes, dans lequel les gorges longitudinales (5) suivent un trajet ondulé le long de la gaine (4).